# EUROPEAN PATENT APPLICATION

(11) **EP 4 697 191 A1**
(43) Date of publication of application: **18.02.2026**
(21) Application number: 24810281.6
(22) Date of filing: 15.05.2024
(51) Int. Cl.: G06F 16/176

(54) **LOCKING RECOVERY METHOD, STORAGE SERVER, CLIENT, DEVICE AND SYSTEM**

(30) Priority: 19.05.2023 CN 202310575675; 05.07.2023 CN 202310820049
(71) Applicant: Huawei Technologies Co., Ltd., Shenzhen, Guangdong 518129 (CN)
(72) Inventor: ZHANG, Mingqian, Shenzhen, Guangdong 518129 (CN)
(74) Representative: Goddar, Heinz J.
(86) International application number: PCT/CN2024/093498
(87) International publication number: WO 2024/240034

(57) **Abstract**

A lock recovery method, a storage server, a client, a device, and a system are disclosed, and relate to the computer field. The method includes: A first storage server locks target data based on a first lock request sent by a client. After the first server is restarted, the first server sends a lock recovery request to the client through a link between any one of a plurality of servers and the client, to indicate the client to recover locking on the first server. Further, the first server receives a second lock request sent by the client, and re-locks the target data indicated by the second lock request. In this way, the lock recovery request is sent through the link between any one of the plurality of servers and the client. Therefore, available channels for sending the lock recovery request are expanded, thereby increasing a success probability of sending the lock recovery request and ensuring successful lock recovery. This avoids a data inconsistency problem caused by a plurality of processes accessing the target data, and improves system reliability.

## Description

This application claims priorities to Chinese Patent Application No. 202310575675.8, filed with the China National Intellectual Property Administration on May 19, 2023 and entitled "LOCK FAULT RECOVERY METHOD", and to Chinese Patent Application No. 202310820049.0, filed with the China National Intellectual Property Administration on July 5, 2023 and entitled "LOCK RECOVERY METHOD, STORAGE SERVER, CLIENT, DEVICE, AND SYSTEM", both of which are incorporated herein by reference in their entireties.

### TECHNICAL FIELD

This application relates to the computer field, and in particular, to a lock recovery method, a storage server, a client, a device, and a system.

### BACKGROUND

Currently, a client may mount a shared file of a storage server based on a network file system, and remotely access the shared file of the storage server through a network. Data is transmitted between the client and a plurality of storage servers through a plurality of links, and network resource utilization is improved by increasing concurrencies. To avoid a data inconsistency problem caused by different processes simultaneously accessing target data in the shared file, the accessed target data in the shared file is locked. After the server is restarted, the target data needs to be re-locked. Therefore, when a link between the client and the server is disconnected, how to implement lock recovery is an urgent problem to be resolved.

### SUMMARY

This application provides a lock recovery method, a storage server, a client, a device, and a system, to implement lock recovery in a scenario in which a link between the client and the storage server is disconnected, thereby avoiding a data inconsistency problem and improving system reliability.

According to a first aspect, a lock recovery method is provided. Direct links are separately established between a plurality of storage servers and a client, the plurality of storage servers include a first storage server, and the method includes: After receiving a first lock request sent by the client, the first storage server locks target data indicated by the first lock request. After the first storage server is restarted, the first server sends a lock recovery request to the client through a link between any one of the plurality of storage servers and the client, where the lock recovery request indicates the client to recover locking on the first storage server. Further, the first server receives a second lock request sent by the client, and re-locks the target data indicated by the second lock request.

In this way, when the storage server sends the lock recovery request through a specific link, if the specific link is faulty, the lock recovery request cannot be sent, causing a lock recovery failure. According to the solution provided in this application, when the link established between any one of the plurality of storage servers and the client is smooth, the lock recovery request is sent through the link between any one of the plurality of storage servers and the client. Therefore, available channels for sending the lock recovery request are expanded, thereby increasing a success probability of sending the lock recovery request and ensuring successful lock recovery. In addition, because different clients or different processes in the client can access the target data in the storage server, a data inconsistency problem may occur when the different clients or the different processes in the client contend for accessing the target data. The target data is locked, to avoid the data inconsistency problem caused by contention for accessing the target data. Therefore, after the server is restarted, it is necessary to re-lock the target data and ensure successful sending of the lock recovery request, so that the data inconsistency problem caused by the plurality of processes accessing the target data is avoided by successfully performing lock recovery, thereby improving system reliability.

In a possible implementation, sending the lock recovery request to the client through the link between any one of the plurality of storage servers and the client includes: sending the lock recovery request to the client through a link between any storage server other than the first storage server in the plurality of storage servers and the client.

For example, when a first link between the first storage server and the client is abnormal, the lock recovery request is sent to the client through a second link between a second storage server other than the first storage server in the plurality of storage servers and the client.

When the lock recovery request is sent only through a link between the restarted storage server and the client, if the link is abnormal, the lock recovery request fails to be sent, and lock recovery cannot be implemented. According to the solution provided in this application, the lock recovery request is sent through the link between the any storage server other than the first storage server in the plurality of storage servers and the client, until the lock recovery request is successfully sent. Therefore, successful lock recovery is ensured, and lock recovery reliability is improved. This avoids the data inconsistency problem caused by the plurality of processes accessing the target data, and improves the system reliability.

In another possible implementation, sending the lock recovery request to the client through the link between the any storage server other than the first storage server in the plurality of storage servers and the client includes: sending the lock recovery request to the any storage server other than the first storage server in the plurality of storage servers, and then sending the lock recovery request to the client through the link between the any storage server other than the first storage server in the plurality of storage servers and the client. Therefore, the any storage server sends the lock recovery request to the client.

In another possible implementation, sending the lock recovery request to the client through the link between any one of the plurality of storage servers and the client includes: sending the lock recovery request to the client through the link between the first storage server in the plurality of storage servers and the client.

For example, when the first link between the first storage server and the client is normal, the lock recovery request is sent to the client through the link between the first storage server in the plurality of storage servers and the client.

Therefore, in a scenario in which the plurality of storage servers are connected to the client, that is, the client mounts the plurality of storage servers, the lock recovery request is sent, to ensure successful lock recovery.

In another possible implementation, the first storage server persistently stores addresses of the plurality of storage servers. Therefore, when the link between the first storage server and the client is disconnected, any storage server other than the first storage server is selected from the plurality of storage servers, and the lock recovery request is sent to the client through a link between the any storage server other than the first storage server in the plurality of storage servers and the client.

In another possible implementation, the first storage server stores lock information of the plurality of storage servers, and the lock information of the plurality of storage servers includes lock information of the target data in the first storage server. Therefore, the first storage server manages the lock information.

In another possible implementation, the second lock request indicates to recover the locking performed on the target data based on the first lock request. It may be understood that the first lock request and the second lock request include same content, and the second lock request is a retransmission message of the first lock request. For example, both the first lock request and the second lock request include the lock information of the target data.

In another possible implementation, the addresses of the plurality of storage servers belong to a same mount point. In this way, a same service is deployed on one mount point, and different mount points are used to isolate different services, thereby avoiding mutual interference.

In another possible implementation, receiving the first lock request sent by the client includes: receiving the first lock request through the link between any one of the plurality of storage servers and the client.

In another possible implementation, receiving the first lock request sent by the client includes: receiving the first lock request through the link between the first storage server and the client.

In another possible implementation, receiving the first lock request sent by the client includes: receiving the first lock request through a link between a specified storage server in the plurality of storage servers and the client.

Optionally, the first storage server may receive the second lock request with reference to a manner of receiving the first lock request.

According to a second aspect, a lock recovery method is provided. A client mounts a plurality of storage servers, the plurality of storage servers include a first storage server, and the method includes: After sending a first lock request to the first storage server, the client receives a lock recovery request through a link between any one of the plurality of storage servers and the client, and sends a second lock request to the first storage server. The first lock request indicates to lock target data that belongs to the first storage server. The lock recovery request indicates the client to recover locking on the target data that belongs to the first storage server. The second lock request indicates to re-lock the target data that belongs to the first storage server.

In this way, when the client receives the lock recovery request through a specific link, if the specific link is faulty, the lock recovery request cannot be received, causing a lock recovery failure. According to the solution provided in this application, when the link established between any one of the plurality of storage servers and the client is smooth, the lock recovery request is received through the link between any one of the plurality of storage servers and the client. Therefore, available channels for receiving the lock recovery request are expanded, thereby increasing a success probability of receiving the lock recovery request and ensuring successful lock recovery. The target data is re-locked, to avoid a data inconsistency problem caused by a plurality of processes accessing the target data, thereby improving system reliability.

In a possible implementation, receiving the lock recovery request through the link between any one of the plurality of storage servers and the client includes: receiving the lock recovery request through a link between any storage server other than the first storage server in the plurality of storage servers and the client.

When the lock recovery request is received only through a link between the restarted storage server and the client, if the link is abnormal, the lock recovery request fails to be received, and lock recovery cannot be implemented. According to the solution provided in this application, the lock recovery request is received through the link between the any storage server other than the first storage server in the plurality of storage servers and the client, until the lock recovery request is successfully received. Therefore, successful lock recovery is ensured, and lock recovery reliability is improved. This avoids the data inconsistency problem caused by the plurality of processes accessing the target data, and improves the system reliability.

In another possible implementation, receiving the lock recovery request through the link between any one of the plurality of storage servers and the client includes: receiving the lock recovery request through a link between the first storage server in the plurality of storage servers and the client.

Therefore, in a scenario in which the plurality of storage servers are connected to the client, that is, the client mounts the plurality of storage servers, the lock recovery request is received, to ensure successful lock recovery.

In another possible implementation, sending the second lock request to the first storage server includes: sending the second lock request to the first storage server after an address of the first storage server in the lock recovery request is successfully verified. In this way, validity of lock recovery is verified, thereby improving system security.

In another possible implementation, that the address of the first storage server in the lock recovery request is successfully verified includes: when addresses of the plurality of storage servers stored in the client include the address of the first storage server and an address of a storage server that sends the lock recovery request, determining that the verification succeeds.

In another possible implementation, the client persistently stores the addresses of the plurality of storage servers. In this way, the lock recovery request is verified.

In another possible implementation, the client stores lock information of the plurality of storage servers, and the lock information of the plurality of storage servers includes lock information of the target data in the first storage server. Therefore, the client manages the lock information, and feeds back the lock information to the storage server.

In another possible implementation, the addresses of the plurality of storage servers belong to a same mount point. In this way, a same service is deployed on one mount point, and different mount points are used to isolate different services, thereby avoiding mutual interference.

Optionally, that the addresses of the plurality of storage servers belong to the same mount point may be alternatively described as that the plurality of storage servers belong to the same mount point.

In another possible implementation, sending the first lock request to the first storage server includes: sending the first lock request through the link between any one of the plurality of storage servers and the client.

In another possible implementation, sending the first lock request to the first storage server includes: sending the first lock request through the link between the first storage server and the client.

In another possible implementation, sending the first lock request to the first storage server includes: sending the first lock request through a link between a specified storage server in the plurality of storage servers and the client.

According to a third aspect, a storage server is provided. Direct links are separately established between a plurality of storage servers and a client, and the plurality of storage servers include a first storage server. For example, the first storage server includes: a locking module, configured to lock, based on a first lock request of the client, target data indicated by the first lock request; and a communication module, configured to: after the first storage server is restarted, send a lock recovery request to the client through a link between any one of the plurality of storage servers and the client, where the lock recovery request indicates the client to recover locking on the first storage server. The communication module is further configured to receive a second lock request sent by the client, and the locking module is further configured to lock the target data indicated by the second lock request.

In a possible implementation, when sending the lock recovery request to the client through the link between any one of the plurality of storage servers and the client, the communication module is specifically configured to send the lock recovery request to the client through a link between any storage server other than the first storage server in the plurality of storage servers and the client.

In another possible implementation, when sending the lock recovery request to the client through the link between the any storage server other than the first storage server in the plurality of storage servers and the client, the communication module is specifically configured to send the lock recovery request to the any storage server other than the first storage server in the plurality of storage servers.

In another possible implementation, when sending the lock recovery request to the client through the link between any one of the plurality of storage servers and the client, the communication module is specifically configured to send the lock recovery request to the client through a link between the first storage server in the plurality of storage servers and the client.

In another possible implementation, the first storage server persistently stores addresses of the plurality of storage servers.

In another possible implementation, the first storage server stores lock information of the plurality of storage servers, and the lock information of the plurality of storage servers includes lock information of the target data in the first storage server.

In another possible implementation, the second lock request indicates to recover the locking performed on the target data based on the first lock request.

In another possible implementation, the addresses of the plurality of storage servers belong to a same mount point.

In another possible implementation, receiving the first lock request sent by the client includes: receiving the first lock request through the link between any one of the plurality of storage servers and the client.

In another possible implementation, receiving the first lock request sent by the client includes: receiving the first lock request through the link between the first storage server and the client.

In another possible implementation, receiving the first lock request sent by the client includes: receiving the first lock request through a link between a specified storage server in the plurality of storage servers and the client.

According to a fourth aspect, a client is provided. The client mounts a plurality of storage servers, and the plurality of storage servers include a first storage server. The client includes: a communication module, configured to send a first lock request to the first storage server, where the first lock request indicates to lock target data that belongs to the first storage server. The communication module is further configured to receive a lock recovery request through a link between any one of the plurality of storage servers and the client, where the lock recovery request indicates the client to recover locking on the target data that belongs to the first storage server. The communication module is further configured to send a second lock request to the first storage server, where the second lock request indicates to lock the target data that belongs to the first storage server.

In a possible implementation, when receiving the lock recovery request through the link between any one of the plurality of storage servers and the client, the communication module is specifically configured to receive the lock recovery request through a link between any storage server other than the first storage server in the plurality of storage servers and the client.

In another possible implementation, when receiving the lock recovery request through the link between any one of the plurality of storage servers and the client, the communication module is specifically configured to receive the lock recovery request through a link between the first storage server in the plurality of storage servers and the client.

In another possible implementation, when sending the second lock request to the first storage server, the communication module is specifically configured to: send the second lock request to the first storage server after an address of the first storage server in the lock recovery request is successfully verified.

In another possible implementation, the apparatus further includes a locking module, and the locking module is configured to: when addresses of the plurality of storage servers stored in the client include the address of the first storage server and an address of a storage server that sends the lock recovery request, determine that the verification succeeds.

In another possible implementation, the client persistently stores the addresses of the plurality of storage servers.

In another possible implementation, the client stores lock information of the plurality of storage servers, and the lock information of the plurality of storage servers includes lock information of the target data in the first storage server.

In another possible implementation, the addresses of the plurality of storage servers belong to a same mount point.

In another possible implementation, when sending the first lock request to the first storage server, the communication module is specifically configured to send the first lock request through the link between any one of the plurality of storage servers and the client.

In another possible implementation, when sending the first lock request to the first storage server, the communication module is specifically configured to send the first lock request through the link between the first storage server and the client.

In another possible implementation, when sending the first lock request to the first storage server, the communication module is specifically configured to send the first lock request through a link between a specified storage server in the plurality of storage servers and the client.

According to a fifth aspect, a computer device is provided. The computer device includes at least one processor and a storage. The storage is configured to store a group of computer instructions. When the processor is used as the storage server in any one of the first aspect or the possible implementations of the first aspect to execute the group of computer instructions, the processor performs operation steps of the lock recovery method in any one of the first aspect or the possible implementations of the first aspect. When the processor is used as the client in any one of the second aspect or the possible implementations of the second aspect to execute the group of computer instructions, the processor performs operation steps of the lock recovery method in any one of the second aspect or the possible implementations of the second aspect.

According to a sixth aspect, a communication system is provided. The communication system includes a client and a plurality of storage servers, and the client mounts the plurality of storage servers. The storage server is configured to perform operation steps of the lock recovery method in any one of the first aspect or the possible implementations of the first aspect. The client is configured to perform operation steps of the lock recovery method in any one of the second aspect or the possible implementations of the second aspect.

According to a seventh aspect, a computer-readable storage medium is provided, and includes computer software instructions. When the computer software instructions are run on a computer device, the computer device is enabled to perform operation steps of the method according to any one of the first aspect or the possible implementations of the first aspect, or perform operation steps of the method according to any one of the second aspect or the possible implementations of the second aspect.

According to an eighth aspect, a computer program product is provided. When the computer program product runs on a computer, the computer is enabled to perform operation steps of the method according to any one of the first aspect or the possible implementations of the first aspect, or perform operation steps of the method according to any one of the second aspect or the possible implementations of the second aspect.

For technical effects brought by any design manner in the third aspect to the eighth aspect, refer to technical effects brought by different design manners in the first aspect and the second aspect. Details are not described herein.

In this application, on the basis of the implementations according to the foregoing aspects, the implementations may be further combined to provide more implementations.

### BRIEF DESCRIPTION OF DRAWINGS

FIG. 1 is a diagram of mounting according to this application;
FIG. 2 is a diagram of an architecture of a communication system according to this application;
FIG. 3 is a diagram of an architecture of an NFS according to this application;
FIG. 4 is a schematic flowchart of a locking method according to this application;
FIG. 5 is a schematic flowchart of a lock recovery method according to this application;
FIG. 6 is a diagram of a structure of a storage server according to this application;
FIG. 7 is a diagram of a structure of a client according to this application; and
FIG. 8 is a diagram of a structure of a computer device according to this application.

### DESCRIPTION OF EMBODIMENTS

For ease of understanding, main terms in this application are first explained.

**Network file system (NFS):** is a file sharing protocol in a distributed file system. The network file system enables computers running different operating systems (such as Linux, UNIX, and Windows) to share data through a network, and accessing files on a remote computer is the same as accessing files on a local computer. This implements fast and reliable file sharing services. To be specific, a file directory on the remote computer is mounted to a local directory on the local computer, and a file on the remote computer can be accessed by accessing the local directory.

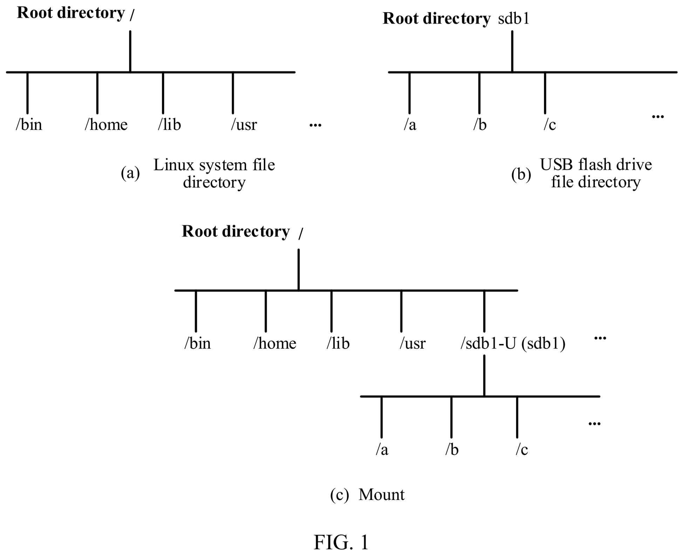

**Mount (mount):** indicates that a directory on the remote computer is connected to a subdirectory in a root directory on the local computer. Accessing the subdirectory on the local computer is equivalent to accessing content in the directory on the remote computer. The subdirectory in the root directory on the local computer may be an empty directory. A name of the subdirectory on the local computer can be the same as a name of the directory mounted to the remote computer. For example, as shown in (a) in FIG. 1, in a Linux system file directory, a root directory "/" includes subdirectories such as /bin, /home, /lib, and /usr. As shown in (b) in FIG. 1, in a USB flash drive file directory, a USB flash drive root directory "sdb1" includes subdirectories such as /a, /b, and /c. (c) in FIG. 1 is a diagram of mounting the USB flash drive file directory to the Linux system file directory. An empty subdirectory named /sdb1-U is created in the root directory of the Linux system file directory. The USB flash drive file directory is mounted to /sdb1-U. Accessing /sdb1-U is equivalent to accessing content in the USB flash drive file directory sdb1.

**Mount point:** is an entry directory of a Linux system file system, which is similar to drive letters such as C:, D:, and E: used to access different partitions in Windows. For example, mount points include /bin, /home, /lib, /usr, and /dev. /bin includes commands and functions required by the system. /home indicates a default directory of a user. /lib includes library files and kernel information. /usr includes system commands, applications, and the like that are used by the user. /dev includes a directory for storing device files.

In the Linux, software and hardware resources are recorded in files and the files can be shared in a multi-user environment. When a plurality of processes access a target file, the plurality of processes contend for a shared resource in the target file.

For example, it is assumed that a file 1 includes a remaining amount of an account. A process A and a process B access the file 1. The process A modifies the remaining amount in the file 1 and writes a modified remaining amount 1 into the file 1. Because the process B reads the remaining amount in the file 1 but does not read the modified remaining amount 1, the process B modifies the remaining amount in the file 1, and writes a modified remaining amount 2 into the file 1. In this case, the file 1 may include the modified remaining amount 2, but does not include the modified remaining amount 1, causing a data inconsistency problem.

To avoid data inconsistency caused by the contention for the shared resource, file locks are used to ensure "serialization" of operations. In other words, file locks are used to overcome the data inconsistency problem.

**File lock:** is a mechanism used to resolve the data inconsistency problem caused by the contention for the shared resource. For example, a first client accesses a server, reads or modifies data of the server, or writes data into the server. The first client requests the server to lock accessed target data. After the server performs locking, a client other than the first client is not allowed to access the target data, thereby avoiding data inconsistency. For another example, a first process in a client accesses target data, and a process other than the first process is not allowed to access the target data. After a server is restarted, lock loss may be caused. In this case, the server requests the client to perform re-locking.

The NFS described in this application may be designed based on a client-server (Client-Server, C/S) architecture. An NFS client software is installed on a client, and an NFS server software is installed on a server. A file directory on the server is mounted to the client, so that the client can access a file system of the server in different languages, operating systems, and folders. Optionally, the client may be a local computer, a local device, a local end computer, or a local end device. The server may be a remote computer or a remote device. The client may also be referred to as an NFS client. The server may also be referred to as an NFS server.

In some embodiments, a client establishes at least one link to one server, and the client may remotely access a file system of the server through a network based on the at least one link between the client and the server. A link (link) is a physical line between two nodes. The link may also be referred to as a physical link or a communication link.

In some other embodiments, a client separately establishes direct links to a plurality of servers, and accesses file systems of the plurality of servers, to improve network resource utilization by increasing concurrencies. For example, the client divides to-be-written data into a plurality of data blocks, and writes the plurality of data blocks into a plurality of servers, to improve network resource utilization and a data transmission rate. Addresses of the plurality of servers may be different. Addresses used by the client to connect to the plurality of servers may also be different. For example, the client includes a plurality of network interface cards, the plurality of network interface cards have different addresses, and the client establishes the direct links to the plurality of servers through the different network interface cards. When a direct link is established between a server and the client, the server can communicate with the client without forwarding data through another server. In other words, there may be network devices such as a router and a switch between the server and the client, but other servers are not included. The client generally runs on a computing device, for example, a mobile phone, a host, or a notebook computer.

It may be understood that, one client may separately establish direct links to at least two servers, and access file systems of the at least two servers. A plurality of clients may establish direct links to a plurality of servers, and each client may separately establish direct links to at least two servers. One server may alternatively be connected to at least two clients, so that the server can be mounted to a plurality of clients. A direct link or an indirect connection may be established between a plurality of servers. In other words, there may be network devices such as a router and a switch between the servers, and an indirect connection is established between the servers through the network device.

In addition, in a scenario in which the client separately establishes direct links to a plurality of servers, or in a scenario in which a plurality of clients may establish direct links to a plurality of servers, when the client accesses target data in the server, the client may indicate the server to lock the target data, to prevent another client from accessing the target data again. Alternatively, when a first process accesses target data in the server, the server locks the target data, to prevent a process (for example, a second process) other than the first process from accessing the target data again. The first process and the process other than the first process may be processes running on a same client, or processes running on different clients.

To resolve a problem of how to implement lock recovery in a scenario in which data is transmitted between a client and a plurality of servers through a plurality of links and a link between the client and a server is disconnected, this application provides a lock recovery method. To be specific, after a first server in the plurality of servers is restarted, a lock recovery request is sent to the client through a link between any one of the plurality of servers and the client, so that the first server performs re-locking after receiving a lock request sent by the client.

In this way, when the server sends the lock recovery request through a specific link, if the specific link is faulty, the lock recovery request cannot be sent, causing a lock recovery failure. According to the solution provided in this application, when the link established between any one of the plurality of servers and the client is smooth, the lock recovery request is sent through the link between any one of the plurality of servers and the client. Therefore, available channels for sending the lock recovery request are expanded, thereby increasing a success probability of sending the lock recovery request and ensuring successful lock recovery. In addition, because different clients or different processes in the client can access the target data in the server, a data inconsistency problem may occur when the different clients or the different processes in the client contend for accessing the target data. The target data is locked, to avoid the data inconsistency problem caused by contention for accessing the target data. Therefore, after the server is restarted, it is necessary to re-lock the target data and ensure successful sending of the lock recovery request, so that the data inconsistency problem caused by the plurality of processes accessing the target data is avoided by successfully performing lock recovery, thereby improving system reliability.

A type and a function of the server are not limited in this application. For example, the type of the server includes a blade server, a tower server, a cabinet server, and a rack server. For another example, the server includes a storage server having a storage function or a computing server having a computing function, and the computing server also has the storage function.

The following describes in detail, with reference to the accompanying drawings, implementations of locking and lock recovery provided in this application.

The solution provided in this application may be applied to a communication system like a cluster network or a supernode interconnection network, for example, a high performance computing (High performance computing, HPC) network or a high availability (High Availability, HA) network.

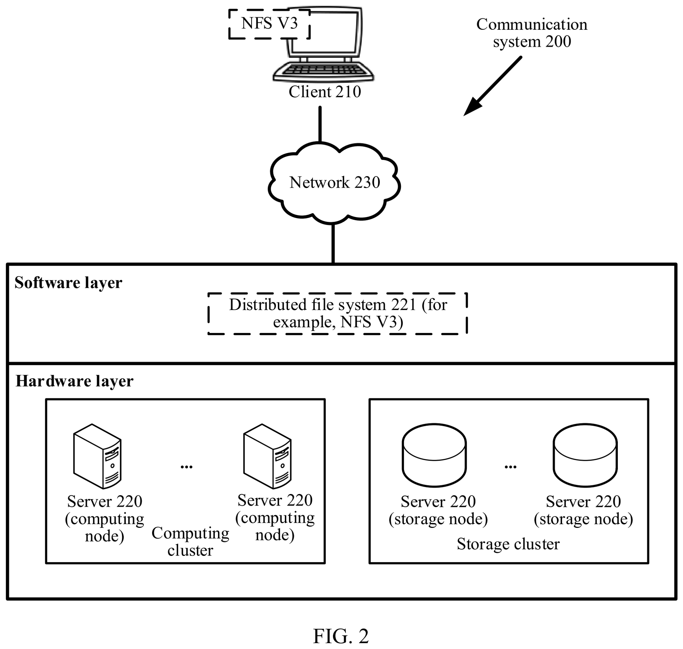

For example, FIG. 2 is a diagram of an architecture of a communication system according to this application. As shown in FIG. 2, the communication system 200 includes a client 210 and a plurality of servers 220.

The server 220 may be a computing node that provides a computing function, for example, a controller of a storage array. The computing node may also be referred to as a computing server. A plurality of servers that provide the computing function may form a computing cluster. For example, the server 220 may include a computing unit having a computing capability, for example, a central processing unit (central processing unit, CPU), a graphics processing unit (graphics processing unit, GPU), a data processing unit (data processing unit, DPU), a neural processing unit (neural processing unit, NPU), and an embedded neural-network processing unit (neural-network processing unit, NPU), to provide high performance computing.

The server 220 may alternatively be a storage node that provides a storage function, and the storage node may also be referred to as a storage server. A plurality of servers that provide the storage function may form a storage cluster. For example, the server 220 may include one or more controllers, a network interface card, and a plurality of hard disks. The hard disk is configured to store data. The hard disk may be a magnetic disk or another type of storage medium, for example, a solid-state drive or a shingled magnetic recording hard disk. The network interface card is configured to communicate with the computing node or the client 210. The controller is configured to write data into the hard disk or read data from the hard disk based on a data read/write request sent by the computing node. In a data read/write process, the controller needs to convert an address carried in the data read/write request into an address that can be identified by the hard disk.

FIG. 2 is merely a diagram. A quantity of devices included in the communication system is not limited in embodiments of this application. For example, the communication system may include a plurality of clients. One client can be connected to a plurality of servers and mount directories of different servers. Different clients are connected to different servers and mount directories of the different server. A same server can be mounted to different clients. Optionally, the communication system may further include another device, for example, may further include a network device (for example, a switch or a router). The plurality of servers are connected through a network device, and data is transmitted through the network device.

The client 210 communicates with the plurality of servers 220 through a network 230. The network 230 may be an internal network of an enterprise (for example, a local area network (Local Area Network, LAN)) or the Internet (Internet).

In some embodiments, the plurality of servers 220 manage data based on a distributed file system 221 (for example, an NFS). For example, the client 210 and the plurality of servers 220 separately deploy a network file system version 3 (Network File System Version 3, NFS V3). The client 210 mounts file directories in the plurality of servers 220, so that the client 210 can access file systems of the plurality of servers 220 in different languages, operating systems, and folders. The client accesses the plurality of servers through a plurality of links. Network resource utilization and a data transmission rate are improved by increasing concurrencies. For example, the client writes data into the plurality of servers or reads data from the plurality of servers through the plurality of links. A directory of one server or directories of a plurality of servers may be mounted to one mount point of the client. The client can also mount directories of a plurality of servers to a plurality of mount points. In this way, a same service is deployed on one mount point, and different mount points are used to isolate different services, thereby avoiding mutual interference.

In addition, the client accesses the plurality of servers through the plurality of links, and may indicate the servers to perform locking, to avoid a data inconsistency phenomenon caused by contention for a shared resource.

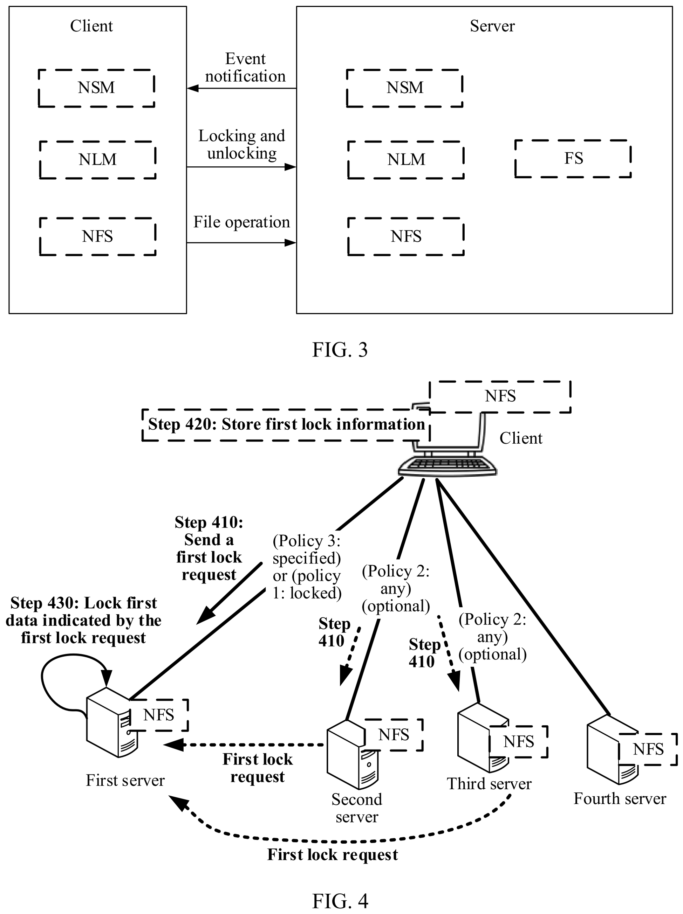

For example, FIG. 3 is a diagram of an architecture of an NFS according to this application. As shown in FIG. 3, a client includes an NSM module, an NLM module, and an NFS module. A server includes an NSM module, an NLM module, an NFS module, and an FS module. With these modules, the client can remotely access files on the server, and implement functions such as locking, unlocking, and lock recovery on the files on the server.

The NFS module of the client is configured to provide functions such as mounting directories of a plurality of servers and performing a file operation on the servers. For example, the file operation includes at least one of file creation, deletion, and query.

The network lock manager (Network Lock Manager, NLM) module of the client is configured to provide functions such as locking, unlocking, and lock recovery on the server, and managing lock information in a form of a monitoring group.

The network status monitor (Network Status Monitor, NSM) module of the client is configured to manage the monitoring group, sense a lock recovery event, and the like. For example, the monitoring group may include an address of a server on which locking is successfully performed and an address of the client, for example, an Internet Protocol (Internet Protocol, IP) address.

The NFS module of the server is configured to provide NFS protocol services, such as reading, writing, deleting, and querying files.

The NLM module of the server is configured to provide a lock service, and support functions such as locking, unlocking, and lock recovery.

The NSM module of the server is configured to manage the monitoring group. For example, after the locking succeeds, the address of the client and the address of the server are persisted to a file system. After the server is restarted, the server obtains a monitoring group that includes the address of the server, and sends a lock recovery request to the client based on the address that is of the server and that is included in the monitoring group until the lock recovery request is successfully sent.

The file system (FS) module of the server is configured to store lock information of the server, and optionally, further store the address of the client and the address of the server.

The file system module of server is also configured to manage the address of the server and query all monitoring groups on a same network segment based on the address.

The following describes a locking phase and a lock recovery phase in detail with reference to the accompanying drawings.

FIG. 4 is a schematic flowchart of a locking method according to this application. It is assumed that a client establishes connections (for example, a transmission control protocol (Transmission Control Protocol, TCP) or a user datagram protocol (User Datagram Protocol, UDP)) to four servers (for example, a first server to a fourth server), and the client mounts directories of the four servers. Herein, an example in which the client accesses the first server is used for description. The client may be the client shown in FIG. 2. The server may be the storage server in the storage cluster in FIG. 2. As shown in FIG. 4, the method includes the following steps.

**Step 410: The client sends a first lock request to the first server.**

The client may send the first lock request to the first server according to a link selection policy.

Policy 1: The client sends the first lock request through a link between a server that needs to be locked and the client. For example, the client indicates the first server to perform locking, and the client sends the first lock request through a link between the first server and the client.

Policy 2: The client sends the first lock request through a link between any one of a plurality of servers connected to the client and the client. For example, the client randomly selects the second server from the four servers, and sends the first lock request through a link between the second server and the client. The second server forwards the first lock request to the first server. For another example, the client selects, from the four servers according to a load balancing policy, the third server whose load is less than a threshold, and sends the first lock request through a link between the third server and the client.

Policy 3: The client sends the first lock request through a link between a specified server in a plurality of servers and the client. For example, the specified server is the first server, the client indicates the first server to perform locking, and the client sends the first lock request through a link between the first server and the client; or the client indicates the second server to perform locking, the client sends a second lock request to the first server through a link between the first server and the client, and the first server forwards the second lock request to the second server. The first lock request indicates to lock first data of the first server. The second lock request indicates to lock second data of the second server. The target data described in this application may be the first data or the second data.

In some embodiments, the first lock request includes a start address of data, a data length, an end address of the data (optional), a lock type (a read lock or a write lock), and the like. For example, when the client reads data stored in the first server, the lock type may be the read lock. When the client modifies data stored in the first server or writes data into the first server, the lock type may be the write lock.

The first lock request may further include an address of the client and an address of the first server. The address of the client may be a source address of the first lock request, and the address of the first server may be a destination address of the first lock request.

Step 420: The client stores first lock information.

The client stores information included in the first lock request. For example, the client may store the first lock information into a memory of the client. The first lock information includes the start address of the data, the data length, the end address of the data (optional), the lock type (the read lock or the write lock), and the like.

In some embodiments, the client stores lock relationships between the client and the plurality of servers (for example, address relationships between the client and a plurality of locked servers), and addresses of the plurality of servers may belong to a same mount point. For example, the client generates a monitoring group based on the first server and a server that belongs to a same mount point as the first server. The monitoring group may include the address of the client, the address of the first server, and an address of the server that belongs to the same mount point as the first server. The address includes but is not limited to an IP address. For example, it is assumed that the client mounts the first server to the fourth server, the first server, the second server, the third server, and the fourth server belong to a same mount point, and the monitoring group may include an address IP1 of the first server, an address IP2 of the second server, an address IP3 of the third server, and an address IP4 of the fourth server. For example, the monitoring group may include an association relationship between the address of the client and the address IP1 of the first server, an association relationship between the address of the client and the address IP2 of the second server, an association relationship between the address of the client and the address IP3 of the third server, and an association relationship between the address of the client and the address IP4 of the fourth server.

The client may persist the monitoring group, for example, store the monitoring group in a monitoring directory of a hard disk. A file name of the monitoring group may be group-n. For example, a file name of a first monitoring group may be group-1.

It should be noted that the address of the first server and the address of the server that belongs to the same mount point as the first server may belong to a same network segment or different network segments. The client can mount a plurality of servers that belong to a same network segment or servers that belong to different network segments. The client can mount a plurality of servers that belong to a same network segment or a plurality of servers that belong to different network segments to a same mount point.

In addition, the client may store lock information by using the monitoring group. For example, the memory of the client stores lock information of a plurality of servers that belong to a same mount point in the monitoring group.

Optionally, the client may store a plurality of monitoring groups and lock information of the plurality of monitoring groups. Server addresses included in different monitoring groups belong to different mount points. For example, the first server and the second server belong to a same mount point, and the first monitoring group includes a correspondence between the address of the client and the address of the first server, and a correspondence between the address of the client and the address of the second server. Lock information of the first monitoring group includes lock information of the first server and lock information of the second server. The third server and the fourth server belong to a same mount point, and a second monitoring group includes a correspondence between the address of the client and the address of the third server, and a correspondence between the address of the client and the address of the fourth server. Lock information of the second monitoring group includes lock information of the third server and lock information of the fourth server.

Optionally, after establishing a connection to the server, the client may alternatively mount a directory of the server to a directory of the client, and create a monitoring group.

Optionally, after the client establishes a connection to the server, the server may alternatively send a monitoring group to the client, and the client stores the monitoring group fed back by the server.

Optionally, after the client establishes a connection to the server, the client may alternatively classify, based on an address of the server, servers that belong to a same network segment into a monitoring group, and store the monitoring group.

**Step 430: The first server locks, based on the first lock request of the client, the first data indicated by the first lock request.**

The first server may receive the first lock request through a link selected by the client according to the link selection policy.

Policy 1: The client sends the first lock request through the link between the server that needs to be locked and the client. For example, the first server receives the first lock request through the link between the first server and the client.

Policy 2: The client sends the first lock request through the link between any one of the plurality of servers connected to the client and the client. The first server receives the first lock request from the any server selected by the client. For example, the first server receives the first lock request from the second server.

Policy 3: The client sends the first lock request through the link between the specified server in the plurality of servers and the client. The first server receives the first lock request from the specified server. For example, the specified server is the first server, and the first server receives the first lock request through the link between the first server and the client.

The first server locks the first data based on the information included in the first lock request. For an explanation of the first lock request, refer to the description of step 410. Optionally, the first server may further send a response message to the client, to indicate that the locking succeeds.

In some embodiments, the first server stores address relationships between the client and the plurality of servers, and the lock information of the first server. The addresses of the plurality of servers belong to the same mount point. For example, the first server may generate a monitoring group based on the first server and a server that belongs to a same mount point as the first server. The monitoring group may include the address of the client, the address of the first server, and an address of the server that belongs to the same mount point as the first server. The first server stores lock information by using the monitoring group, and the lock information of the monitoring group includes the lock information of the first server. Optionally, the first server may persist the monitoring group, for example, store the monitoring group in a monitoring directory of a hard disk. A memory of the first server stores lock information of the plurality of servers in the monitoring group.

Optionally, the first server may store a plurality of monitoring groups and lock information of the plurality of monitoring groups. For example, the first server persists the first monitoring group and the second monitoring group. The first monitoring group includes the correspondence between the address of the client and the address of the first server, and the correspondence between the address of the client and the address of the second server. The lock information of the first monitoring group includes the lock information of the first server and the lock information of the second server. The second monitoring group includes the correspondence between the address of the client and the address of the third server, and the correspondence between the address of the client and the address of the fourth server. The lock information of the second monitoring group includes the lock information of the third server and the lock information of the fourth server.

Therefore, accessed data in the server is locked, to avoid a data inconsistency problem caused by contention for a shared resource. In addition, the client and the server separately store the address relationships between the client and the plurality of locked servers and the lock information, to implement lock recovery after the server is restarted.

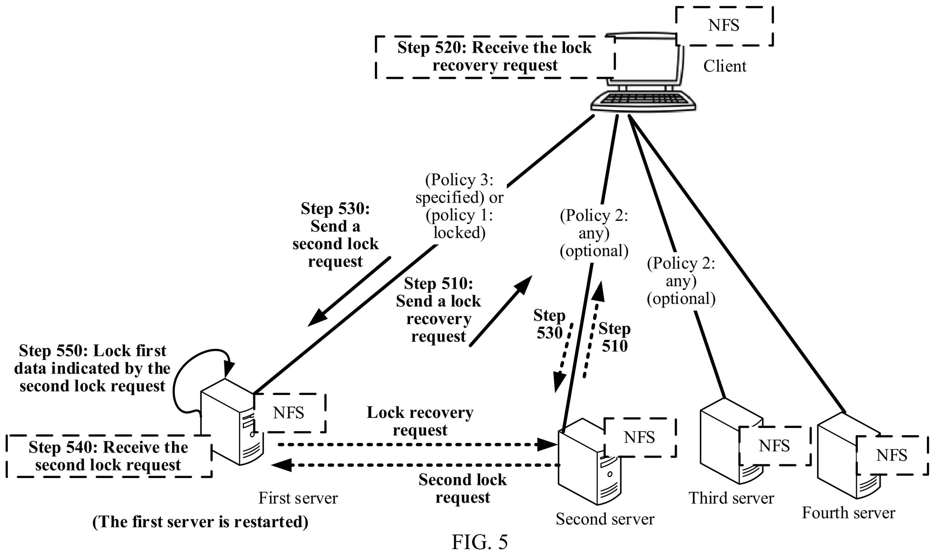

After the server is successfully locked, due to reasons such as a server fault, the server needs to request the client to perform re-locking after the server is restarted. For example, after the server is restarted, the lock information stored in a memory is lost, and the server needs to request the client to perform re-locking. FIG. 5 is a schematic flowchart of a lock recovery method according to this application. A difference from FIG. 4 lies in that after a client locks a first server, the first server is restarted, and requests the client to perform re-locking. As shown in FIG. 5, the method further includes the following steps.

**Step 510: After the first server is restarted, the first server sends a lock recovery request to the client through a link between any one of a plurality of servers and the client.**

After the first server is restarted, because lock information of the first server is lost, the first server needs to request the client to perform re-locking, and send the lock recovery request to the client.

In some embodiments, the first server sends the lock recovery request to the client through a link between the first server and the client. For example, when the link between the first server and the client is in a normal state, the first server sends the lock recovery request to the client through the link between the first server and the client. The normal state of the link may indicate that the link between the client and the server is smooth, and the client and the server can transmit data to each other.

In some other embodiments, the first server sends the lock recovery request to the client through a link between any server other than the first server in the plurality of servers and the client. For example, when the link between the first server and the client is in an abnormal state, the first server sends the lock recovery request to the client through the link between the any server other than the first server in the plurality of servers and the client. The abnormal state of the link may indicate that the link between the client and the server is faulty or disconnected, or cannot be used for data transmission. The abnormal state of the link may be caused by a link fault or a server fault. For example, fault causes include a transmission medium fault between the client and the server, a network interface card fault of the server, and a port fault of the server.

Optionally, the first server may select any server other than the first server from the plurality of servers according to a link selection policy. For example, the first server randomly selects the any server other than the first server from the plurality of servers. For another example, the first server selects, according to a load balancing policy, a server whose load is less than a threshold from the plurality of servers other than the first server.

For example, the first server randomly selects a second server from four servers. The first server forwards the lock recovery request to the second server, and sends the lock recovery request through a link between the second server and the client. For another example, the first server selects, from four servers according to the load balancing policy, a third server whose load is less than a threshold. The first server forwards the lock recovery request to the third server, and sends the lock recovery request through a link between the third server and the client.

For a method for sending the lock recovery request, refer to the description of the method for the first lock request in step 410.

The plurality of servers include a server that belongs to a same mount point as the first server.

Optionally, the first server obtains a monitoring group. The monitoring group includes address relationships between the client and the plurality of servers. For example, the monitoring group may include an address of the client, an address of the first server, and an address of the server that belongs to the same mount point as the first server. The first server selects any server other than the first server from the monitoring group, and sends the lock recovery request through the selected server. The lock recovery request includes an address of the server that sends the lock recovery request, the address of the client, and the address of the first server.

It is assumed that the first server selects the second server from the plurality of servers other than the first server, and sends the lock recovery request to the client through the link between the second server and the client. In other words, the first server sends the lock recovery request to the second server, and the second server sends the lock recovery request through the link between the second server and the client. The lock recovery request includes a source address, a destination address, and an address of a server on which lock recovery is performed. For example, the lock recovery request includes an address of the second server, the address of the client, and the address of the first server. The address of the second server refers to a source address for sending the lock recovery request. The address of the client refers to a destination address for receiving the lock recovery request.

If the first server and the second server belong to a same network segment, the first server may directly send the lock recovery request to the second server. If the first server and the second server belong to different network segments, the first server may send the lock recovery request to the second server by forwarding the lock recovery request through a network device (for example, a switch or a router).

It may be understood that a link used by the first server to send the lock recovery request to the client is an available link, and the available link is a link in a normal state. Optionally, if the lock recovery request fails to be sent through the link that is between the server and the client and that is selected by the first server, a server is re-selected from the plurality of servers, and the lock recovery request is sent through a link between the re-selected server and the client until the lock recovery request is successfully sent.

Step 520: The client receives the lock recovery request through the link between any one of the plurality of servers and the client.

The first server sends the lock recovery request to the client through the link between any one of the plurality of servers and the client. The client receives the lock recovery request through the link between any one of the plurality of servers and the client. For example, the client receives the lock recovery request through the link between the first server in the plurality of servers and the client. For another example, the client receives the lock recovery request through the link between the any server other than the first server in the plurality of servers and the client. For an explanation of the link between any one of the plurality of servers and the client, refer to the description of step 510. Details are not described again.

Step 530: The client sends a second lock request to the first server.

The client receives the lock recovery request through the link between any one of the plurality of servers and the client, verifies the address of the first server in the lock recovery request, and sends the second lock request to the first server after the verification succeeds. The second lock request includes the information included in the first lock request in step 410. For example, the second lock request includes a start address of data, a data length, an end address of the data (optional), and a lock type (a read lock or a write lock) in the first lock request.

In some embodiments, the first server and the client store a monitoring group, where the monitoring group includes the address of the first server and the address of the server that belongs to the same mount point as the first server. Because the server selected by the first server when the first server sends the lock recovery request and the first server belong to a same mount point, when the monitoring group includes the address of the first server and the address of the server that belongs to the same mount point as the first server, it is determined that the verification succeeds. For example, the first server selects any server other than the first server from the monitoring group, and sends the lock recovery request. The client obtains at least one monitoring group, where the at least one monitoring group includes a source address for sending the lock recovery request. The client traverses each monitoring group, and determines whether the monitoring group includes the address of the first server. When the monitoring group includes the address of the first server that requires lock recovery, it is determined that the verification succeeds. Optionally, the client receives the lock recovery request through the link between the first server and the client, and the source address in the lock recovery request may be the address of the first server. The client obtains the at least one monitoring group based on the address of the first server. When the monitoring group includes the address of the first server that requires lock recovery, it is determined that the verification succeeds.

For example, the client receives the lock recovery request through the link between the second server and the client, where the lock recovery request includes the address of the second server and the address of the first server. The client obtains a monitoring group including the address of the second server, and determines that the verification succeeds after determining that the monitoring group includes the address of the first server.

The client may send the second lock request to the first server according to a link selection policy.

Policy 1: The client sends the second lock request through a link between a server that needs to be locked and the client.

Policy 2: The client sends the second lock request through a link between any one of the plurality of servers connected to the client and the client.

Policy 3: The client sends the second lock request through a link between a specified server in the plurality of servers and the client.

Policy 4: The client sends the second lock request through a link between the server that sends the lock recovery request and the client. For example, the client receives the lock recovery request through the link between the second server and the client, and the client sends the second lock request through the link between the client and the second server.

For the policy 1 to the policy 3 for sending the second lock request, refer to the description of step 410.

**Step 540: The first server receives the second lock request sent by the client.**

The first server may receive the second lock request through a link selected by the client according to the link selection policy. For an explanation of receiving the second lock request, refer to the description of receiving the first lock request in step 430.

**Step 550: The first server locks first data indicated by the second lock request.**

It may be understood that the first lock request and the second lock request include same content, and the second lock request is a retransmission message of the first lock request. The first server re-locks the first data based on the information included in the second lock request. In other words, the first server re-locks, based on the second lock request, the target data indicated by the first lock request. The first server stores an address relationship between the client and the first server, and the lock information of the first server. Optionally, the first server updates the monitoring group and lock information of the monitoring group, where the monitoring group includes the address relationship between the client and the first server, and the lock information of the monitoring group includes the lock information of the first server.

In this application, a lock recovery event sent by the server is monitored in a monitoring group manner, and a name of the monitoring group and an address list are persisted to a file system of the client. After the server is restarted due to a fault, the server reads the address of the client and the address of the server that are to be recovered from the file system, and then searches the system for addresses of all servers in a same network segment. A lock recovery request is sent to the client by using any one of the servers in sequence until the lock recovery request is successfully sent. When receiving the lock recovery request from the server, the client matches the address of the server obtained through the link with the persisted address list. If the matching succeeds, a lock recovery procedure is entered. If the matching fails, the request is discarded.

In this way, when links established between the client and the plurality of servers are smooth, the lock recovery request is sent through a link between any one of the plurality of servers and the client. In other words, available channels for sending the lock recovery request are expanded, thereby increasing a success probability of sending the lock recovery request and ensuring successful lock recovery. This avoids a data inconsistency problem caused by a plurality of processes accessing target data, and improves system reliability.

The server in the foregoing embodiments may be an independent physical device, or may be a virtual device like a virtual machine in a physical device. This is not limited in this application.

It may be understood that, to implement functions in the foregoing embodiments, the client and the server (for example, the storage server) include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

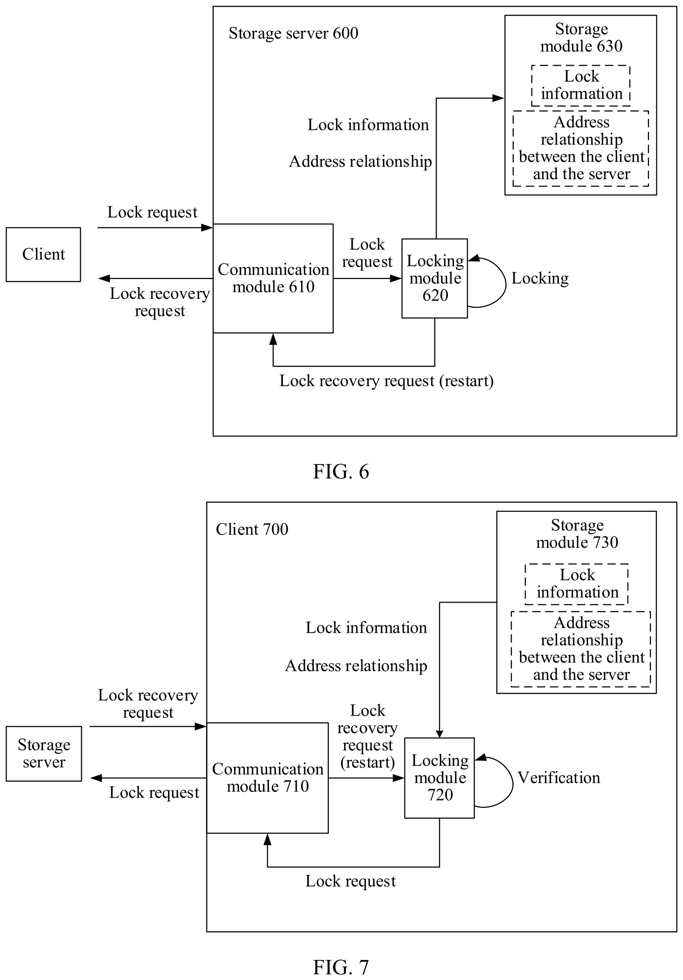

The foregoing describes in detail the locking method and the lock recovery method provided in this application with reference to FIG. 1 to FIG. 5. The following describes apparatuses provided in this application with reference to FIG. 6 and FIG. 7. These apparatuses may be configured to implement functions of the client or the storage server in the foregoing method embodiments, and therefore can also implement beneficial effects of the foregoing method embodiments. In this embodiment, the apparatus may be the device shown in FIG. 2 or FIG. 3, or may be a module (for example, a chip) used in the server or a module (for example, a chip) used in the client.

As shown in FIG. 6, a storage server 600 includes a communication module 610, a locking module 620, and a storage module 630. The storage server 600 is configured to implement functions of the server in the method embodiments shown in FIG. 4 or FIG. 5.

The communication module 610 is configured to: after a first server is restarted, send a lock recovery request to a client through a link between any one of a plurality of servers and the client, where the lock recovery request indicates the client to recover locking on the first server. For example, the communication module 610 is configured to perform step 510 in FIG. 5.

The locking module 620 is configured to lock, based on a first lock request of the client, target data indicated by the first lock request. For example, the locking module 620 is configured to perform step 430 in FIG. 4.

The communication module 610 is further configured to receive a second lock request sent by the client. For example, the communication module 610 is configured to perform step 540 in FIG. 5.

The locking module 620 is further configured to lock the target data indicated by the second lock request. For example, the locking module 620 is configured to perform step 550 in FIG. 5.

Optionally, the communication module 610 is specifically configured to send a lock recovery request to the client through a link between any server other than the first server in the plurality of servers and the client.

Optionally, the communication module 610 is specifically configured to send the lock recovery request to the client through a link between the first server in the plurality of servers and the client.

The storage module 630 is configured to store an address relationship between the client and the server and lock information, so that the client and the server perform a lock recovery procedure.

As shown in FIG. 7, a client 700 includes a communication module 710, a locking module 720, and a storage module 730. The client 700 is configured to implement functions of the client in the method embodiments shown in FIG. 4 or FIG. 5.

The communication module 710 is configured to send a first lock request to a first server, where the first lock request indicates to lock target data of the first server. For example, the communication module 710 is configured to perform step 410 in FIG. 4.

The communication module 710 is further configured to receive a lock recovery request through a link between any one of a plurality of servers and the client, where the lock recovery request indicates the client to recover locking on the first server. For example, the communication module 710 is configured to perform step 520 in FIG. 5.

The communication module 710 is further configured to send a second lock request to the first server, where the second lock request indicates to lock the target data of the first server. For example, the communication module 710 is configured to perform step 530 in FIG. 5.

Optionally, the communication module 710 is specifically configured to receive the lock recovery request through a link between any server other than the first server in the plurality of servers and the client.

Optionally, the communication module 710 is specifically configured to receive the lock recovery request through a link between the first server in the plurality of servers and the client.

The locking module 720 is configured to: when addresses that are of the plurality of servers and that are stored in the client include an address of the first server and an address of a server that sends the lock recovery request, determine that verification succeeds.

The storage module 730 is configured to store an address relationship between the client and the server and lock information, so that the client and the server perform a lock recovery procedure.

It should be understood that the storage server 600 and the client 700 in embodiments of this application may be implemented by using an application-specific integrated circuit (application-specific integrated circuit, ASIC) or a programmable logic device (programmable logic device, PLD). The PLD may be a complex programmable logical device (complex programmable logical device, CPLD), a field-programmable gate array (field-programmable gate array, FPGA), a generic array logic (GAL), or any combination thereof. Alternatively, the locking method shown in FIG. 4 or the lock recovery method shown in FIG. 5 may be implemented by using software, and each module may be a software module. The storage server 600, the client 700, and each module of the storage server 600 and the client 700 may be software modules.

The storage server 600 and the client 700 according to embodiments of this application may correspondingly perform the methods described in embodiments of this application, and the foregoing and other operations and/or functions of units in the storage server 600 and the client 700 are respectively used to implement corresponding procedures of the methods in FIG. 4 or FIG. 5. For brevity, details are not described herein again.

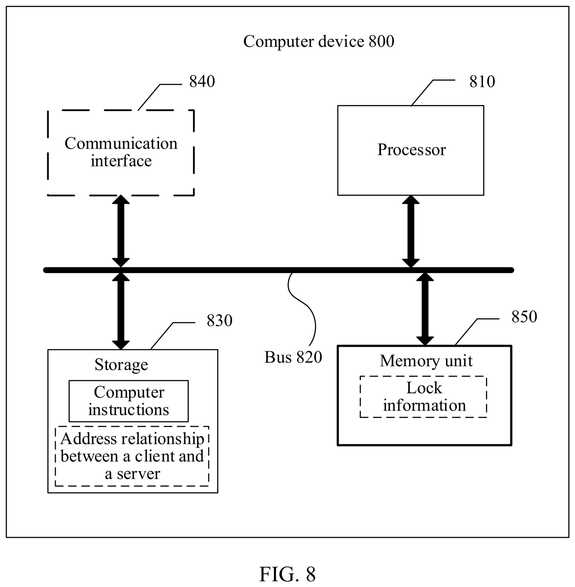

FIG. 8 is a diagram of a structure of a computer device 800 according to this application. As shown in FIG. 8, the computer device 800 includes a processor 810, a bus 820, a storage 830, a communication interface 840, and a memory unit 850 (which may also be referred to as a main memory (main memory) unit). The processor 810, the storage 830, the memory unit 850, and the communication interface 840 are connected through the bus 820.

It should be understood that, in this embodiment, the processor 810 may be a CPU, or the processor 810 may be another general-purpose processor, a digital signal processor (digital signal processor, DSP), an ASIC, an FPGA or another programmable logical device, a discrete gate or a transistor logical device, a discrete hardware component, or the like. The general-purpose processor may be a microprocessor, any conventional processor, or the like.

Alternatively, the processor may be a graphics processing unit (graphics processing unit, GPU), a neural network processing unit (neural network processing unit, NPU), a microprocessor, an ASIC, or one or more integrated circuits configured to control program execution in the solutions of this application.

The communication interface 840 is configured to implement communication between the computer device 800 and an external device or component. In this application, when the computer device 800 is configured to implement a function of the client shown in FIG. 4, the communication interface 840 is configured to send a lock request. When the computer device 800 is configured to implement a function of the client shown in FIG. 5, the communication interface 840 is configured to obtain a lock recovery request, so that the processor 810 indicates, based on the lock recovery request, the server to perform re-locking. When the computer device 800 is configured to implement a function of the server shown in FIG. 4 or FIG. 5, the communication interface 840 is configured to obtain a lock request and send a lock recovery request, so that the processor 810 locks the server.

The bus 820 may include a path, configured to transfer information between the foregoing components (such as the processor 810, the memory unit 850, and the storage 830). In addition to a data bus, the bus 820 may further include a power bus, a control bus, a status signal bus, and the like. However, for clear description, various types of buses in the figures are marked as the bus 820. The bus 820 may be a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL) bus, a cache coherent interconnect for accelerators (cache coherent interconnect for accelerators, CCIX) bus, or the like. The bus 820 may be classified into an address bus, a data bus, a control bus, and the like.

In an example, the computer device 800 may include a plurality of processors. The processor may be a multi-CPU (multi-CPU) processor. The processor herein may be one or more devices, circuits, and/or computing units configured to process data (for example, computer program instructions).

It should be noted that, in FIG. 8, only an example in which the computer device 800 includes one processor 810 and one storage 830 is used. The processor 810 and the storage 830 each indicate a type of device or component. In a specific embodiment, a quantity of each type of devices or components may be determined based on a service requirement.

The memory unit 850 may be a volatile memory pool or a non-volatile memory pool, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative descriptions, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory unit 850 is configured to store lock information and the like.

The storage 830 may correspond to a storage medium, for example, a disk like a hard disk drive or a solid-state drive, configured to store information such as the address relationship between the client and the server in the foregoing method embodiments.

The computer device 800 may be a general-purpose device or a dedicated device. For example, the computer device 800 may be an edge device (for example, a box carrying a chip having a processing capability). Optionally, the computer device 800 may alternatively be a server or another device having a computing capability.

It should be understood that the computer device 800 according to this embodiment may correspond to the storage server 600 and the client 700 in embodiments, and may correspond to a corresponding body that performs any method in FIG. 4 or FIG. 5. In addition, the foregoing and other operations and/or functions of the modules in the storage server 600 and the client 700 are respectively used to implement corresponding procedures of the method in FIG. 4 or FIG. 5. For brevity, details are not described herein again.

The method steps in embodiments may be implemented in a hardware manner, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a computing device. Certainly, the processor and the storage medium may alternatively exist in the computing device as discrete components.

All or some of the foregoing embodiments may be implemented by using software, hardware, firmware, or any combination thereof. When software is used to implement embodiments, all or some of the embodiments may be implemented in a form of a computer program product. The computer program product includes one or more computer programs or instructions. When the computer programs or the instructions are loaded and executed on a computer, the procedures or the functions in embodiments of this application are all or partially executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD). The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A lock recovery method, wherein direct links are separately established between a plurality of storage servers and a client, the plurality of storage servers comprise a first storage server, the method is performed by the first storage server, and the method comprises:
locking, based on a first lock request of the client, target data indicated by the first lock request;
after the first storage server is restarted, sending a lock recovery request to the client through a link between any one of the plurality of storage servers and the client, wherein the lock recovery request indicates the client to recover locking on the first storage server;
receiving a second lock request sent by the client; and
locking the target data indicated by the second lock request.

2. The method according to claim 1, wherein sending the lock recovery request to the client through the link between any one of the plurality of storage servers and the client comprises:
sending the lock recovery request to the client through a link between any storage server other than the first storage server in the plurality of storage servers and the client.

3. The method according to claim 1, wherein sending the lock recovery request to the client through the link between any one of the plurality of storage servers and the client comprises:
sending the lock recovery request to the client through a link between the first storage server in the plurality of storage servers and the client.

4. The method according to any one of claims 1 to 3, wherein the first storage server persistently stores addresses of the plurality of storage servers.

5. The method according to any one of claims 1 to 4, wherein the first storage server stores lock information of the plurality of storage servers, and the lock information of the plurality of storage servers comprises lock information of the target data in the first storage server.

6. The method according to any one of claims 1 to 5, wherein the second lock request indicates to recover the locking performed on the target data based on the first lock request.

7. The method according to any one of claims 1 to 6, wherein the addresses of the plurality of storage servers belong to a same mount point.

8. A lock recovery method, wherein a client mounts a plurality of storage servers, the plurality of storage servers comprise a first storage server, the method is performed by the client, and the method comprises:
sending a first lock request to the first storage server, wherein the first lock request indicates to lock target data that belongs to the first storage server;
receiving a lock recovery request through a link between any one of the plurality of storage servers and the client, wherein the lock recovery request indicates the client to recover locking on the target data that belongs to the first storage server; and
sending a second lock request to the first storage server, wherein the second lock request indicates to lock the target data that belongs to the first storage server.

9. The method according to claim 8, wherein receiving the lock recovery request through the link between any one of the plurality of storage servers and the client comprises:
receiving the lock recovery request through a link between any storage server other than the first storage server in the plurality of storage servers and the client.

10. A storage server, wherein the storage server comprises modules for performing operation steps of the method according to any one of claims 1 to 7.

11. A client, wherein the client comprises modules for performing operation steps of the method according to claim 8 or 9.

12. A computer device, wherein the computer device comprises a memory and a processor, the memory is configured to store a group of computer instructions, and when executing the group of computer instructions, the processor performs operation steps of the method according to any one of claims 1 to 7, or performs operation steps of the method according to claim 8 or 9.

13. A communication system, wherein the communication system comprises a client and a plurality of storage servers, the client mounts the plurality of storage servers, the storage server is configured to perform operation steps of the method according to any one of claims 1 to 7, and the client is configured to perform operation steps of the method according to claim 8 or 9.
